# EUROPEAN PATENT APPLICATION

(11) **EP 4 682 723 A1**
(43) Date of publication of application: **21.01.2026**
(21) Application number: 25188627.1
(22) Date of filing: 09.07.2025
(51) Int. Cl.: G06F 9/50, G06F 9/455

(54) **TECHNIQUES FOR MANAGING VIRTUAL MACHINES**

(30) Priority: 17.07.2024 US 202418775899
(71) Applicant: Red Hat, Inc., Raleigh, NC 27601 (US)
(72) Inventor: TSIRKIN, Michael, Raleigh, 27601 (US)
(74) Representative: Murgitroyd & Company

(57) **Abstract**

Systems and methods are disclosed for managing child virtual machines. An example method includes receiving, at a hypervisor running on a host computer system, a request from a parent virtual machine (VM) to create a child VM, wherein the parent VM includes a first virtual Central Processing Unit (vCPU). The method also includes creating, by the hypervisor responsive to the request, the child VM using a portion of computing resources allocated to the parent VM. The method also includes assigning a second vCPU to the child VM. The method also includes assigning the first vCPU and the second vCPU to a control group that forces the first vCPU and the second vCPU to be assigned to a same physical processing unit and gives the first vCPU of the parent VM a higher priority level.

## Description

### TECHNICAL FIELD

The disclosure is generally related to virtualization systems, and more specifically to management and control of virtual machines.

### BACKGROUND

Virtualization is a computing technique that improves system utilization, decoupling applications from the underlying hardware, and enhancing workload mobility and protection. Virtualization may be realized through the implementation of virtual machines (VMs). A VM is a portion of software that, when executed on appropriate hardware, creates an environment allowing the virtualization of a physical computer system (e.g., a server, a mainframe computer, etc.). The physical computer system is typically referred to as a "host machine," and the operating system of the host machine is typically referred to as the "host operating system." A virtual machine may function as a self-contained platform, executing its own "guest" operating system and software applications. Typically, software on the host machine known as a "hypervisor" (or a "virtual machine monitor") manages the execution of one or more virtual machines, providing a variety of functions such as virtualizing and allocating resources, context switching among virtual machines, backing up the state of virtual machines periodically in order to provide disaster recovery and restoration of virtual machines, and so on. A hypervisor may run directly on the server hardware without an operating system beneath it or as an application running under a traditional operating system. A hypervisor may abstract the physical layer and present this abstraction to virtual machines to use, by providing interfaces between the underlying hardware and virtual devices of virtual machines.

### SUMMARY OF THE INVENTION

In a first aspect of the disclosure, there is provided a method comprising: receiving, at a hypervisor running on a host computer system, a request from a parent virtual machine (VM) to create a child VM, wherein the parent VM includes a first virtual Central Processing Unit (vCPU); responsive to the request, creating, by a processing device executing the hypervisor, the child VM using a portion of computing resources allocated to the parent VM; assigning a second vCPU to the child VM; and assigning the first vCPU and the second vCPU to a control group that forces the first vCPU and the second vCPU to be assigned to a same physical processing unit and gives the first vCPU of the parent VM a higher priority level.

The parent VM and the child VM may be implemented at a same L1 virtualization level and have direct access to the hypervisor.

The parent VM may preempt the child VM if a parent thread of the first vCPU becomes runnable.

The method may further comprise: after creating the child VM, blocking a thread of the first vCPU of the parent VM and performing a context switch from the parent VM to the child VM.

The method may further comprise: sending a signal to a representative thread of the parent VM, wherein the representative thread represents the child VM within a guest operating system of the parent VM; and responsive to the signal, performing a context switch from the child VM to the parent VM.

The hypervisor may be blocked from migrating the second vCPU of the child VM to another processing unit separate from the same physical processing unit of the first vCPU of the parent VM.

The child VM may be a first child VM, and the method may further comprise: receiving a second request from the parent VM to create a second child VM; creating the second child VM and assigning a third vCPU to the second child VM; assigning the third vCPU to the control group of the first vCPU and the second vCPU; and after creating the second child VM, blocking a thread of the first vCPU of the parent VM and performing a context switch from the parent VM to the child VM.

The method may further comprise: sending a signal to a representative thread of the parent VM, wherein the representative thread represents the first child VM or the second child VM; responsive to the signal, performing a context switch from the second child VM to the parent VM; and responsive to a VMenter event from the parent VM targeting the first child VM, performing a context switch from the second child VM to the first child VM.

In accordance with a second aspect of the disclosure, there is provided a system comprising: a processing device; and a memory to store instructions that, when executed by the processing device, cause the processing device to perform the method of the first aspect or any of its optional embodiments. The system may comprise a processing device; and a memory to store instructions that, when executed by the processing device, cause the processing device to: receive, at a hypervisor running on a host computer system, a request from a parent virtual machine (VM) to create a child VM, wherein the parent VM includes a first virtual Central Processing Unit (vCPU); create, by the hypervisor responsive to the request, the child VM using a portion of computing resources allocated to the parent VM; assign a second vCPU to the child VM; and assign the first vCPU and the second vCPU to a control group that forces the first vCPU and the second vCPU to be assigned to a same physical processing unit and gives the first vCPU of the parent VM a higher priority level.

The parent VM and the child VM may be implemented at a same L1 virtualization level and have direct access to the hypervisor.

The parent VM may preempt the child VM if a parent thread of the first vCPU becomes runnable.

The instructions may further cause the processing device to: after the child VM is created, block a thread of the first vCPU of the parent VM and perform a context switch from the parent VM to the child VM.

The instructions may further cause the processing device to: send a signal to a representative thread of the parent VM, wherein the representative thread represents the child VM within a guest operating system of the parent VM; and responsive to the signal, perform a context switch from the child VM to the parent VM.

The hypervisor may be blocked from migrating the second vCPU of the child VM to another processing unit separate from the same physical processing unit of the first vCPU of the parent VM.

The child VM may be a first child VM, and the instructions may further cause the processing device to: receive a second request from the parent VM to create a second child VM; create the second child VM and assign a third vCPU to the second child VM; assign the third vCPU to the control group of the first vCPU and the second vCPU; and after the second child VM is created, block a thread of the first vCPU of the parent VM and perform a context switch from the parent VM to the child VM.

The instructions may further cause the processing device to: send a signal to a representative thread of the parent VM, wherein the representative thread represents the first child VM or the second child VM; responsive to the signal, perform a context switch from the second child VM to the parent VM; and responsive to a VMenter event from the parent VM targeting the first child VM, perform a context switch from the second child VM to the first child VM.

In accordance with a third aspect of the present disclosure, there is provided a non-transitory computer-readable medium, comprising instructions stored thereon which, when executed by a processing device, cause the processing device to perform the method of the first aspect or any of its optional embodiments. The instructions may comprise the following steps: receive, at a hypervisor running on a host computer system, a request from a parent virtual machine (VM) to create a child VM, wherein the parent VM includes a first virtual Central Processing Unit (vCPU); responsive to the request, create, by a processing device executing the hypervisor, the child VM using a portion of computing resources allocated to the parent VM; assign a second vCPU to the child VM; and assign the first vCPU and the second vCPU to a control group that forces the first vCPU and the second vCPU to be assigned to a same physical processing unit and gives the first vCPU of the parent VM a higher priority level.

The parent VM and the child VM may be implemented at a same L1 virtualization level and have direct access to the hypervisor.

The parent VM may preempt the child VM if a parent thread of the first vCPU becomes runnable.

The instructions may further cause the processing device to: after the child VM is created, block a thread of the first vCPU of the parent VM and perform a context switch from the parent VM to the child VM. The instructions may further cause the processing device to wake the parent VM and suspend the child VM if a parent thread of the first vCPU becomes runnable.

The instructions may further cause the processing device to: send a signal to a representative thread of the parent VM, wherein the representative thread represents the child VM within a guest operating system of the parent VM; and responsive to the signal, perform a context switch from the child VM to the parent VM.

The hypervisor may be blocked from migrating the second vCPU of the child VM to another processing unit separate from the same physical processing unit of the first vCPU of the parent VM.

The child VM may be a first child VM, and the instructions may further cause the processing device to: receive a second request from the parent VM to create a second child VM; create the second child VM and assign a third vCPU to the second child VM; assign the third vCPU to the control group of the first vCPU and the second vCPU; and after the second child VM is created, block a thread of the first vCPU of the parent VM and perform a context switch from the parent VM to the child VM.

The instructions may further cause the processing device to: send a signal to a representative thread of the parent VM, wherein the representative thread represents the first child VM or the second child VM; responsive to the signal, perform a context switch from the second child VM to the parent VM; and responsive to a VMenter event from the parent VM targeting the first child VM, perform a context switch from the second child VM to the first child VM.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the scope of the described embodiments.
Fig. 1 is a block diagram that illustrates an example computing device, in accordance with some embodiments of the present disclosure.
Fig. 2 is a block diagram illustrating a system for managing child virtual machines, in accordance with some embodiments of the present disclosure.
Fig. 3 is a flow diagram summarizing a method of creating and configuring a child VM, in accordance with some embodiments of the present disclosure.
Fig. 4 is a block diagram of a system for creating and configuring a child VM, in accordance with some embodiments of the present disclosure.
Fig. 5 is a block diagram of an example computing device that may perform one or more of the operations described herein, in accordance with some embodiments of the present disclosure.

### DETAILED DESCRIPTION

Various processor architectures support virtualization by providing instructions for facilitating virtual machine execution. In certain implementations, a processor can support executing a hypervisor (also referred to as "virtual machine monitor") that can act as a host and have complete control of various hardware resources of a host machine including the processor. A hypervisor can present a virtual machine with an abstraction of one or more virtual processors as well as other virtual devices. A hypervisor can retain selective control of processor resources, physical memory, interrupt management, input/output (I/O), and networking. Each virtual machine (VM) is a guest software environment that can support a stack that includes operating system (OS) and application software. Each VM can operate independently of other VMs and can use the same interface to the processors, memory, storage, graphics, and I/O provided by the physical platform (i.e., host machine). The software executing in a virtual machine can be executed at the reduced privilege level so that the hypervisor can retain control of platform resources.

Nested virtualization refers to virtualization that runs inside an already virtualized environment. In nested virtualization, a hypervisor (hereafter "Level 0 hypervisor") controls physical hardware resources (e.g., bare metal). One or more first virtualized environments (hereafter "Level 1 VM") may run as virtual machine(s) managed by the Level 0 hypervisor. Each Level 1 VM may run its own set of VMs. These VMs can be referred to as Level 2 VMs. Each level indicates a ring of privilege and access to computing resources of a computer system, where Level 0 indicates the most privileged ring within an architecture of the computer system, and incremental levels indicate less privileged rings (e.g., Level 2 VM is less privileged that Level 1 VM). The Level 1 VM may control execution of the Level 2 VM(s).

Interrupts and exceptions are events that indicate that a condition exists in the system, the processor, or within the currently executing task that requires attention of a processor. The action taken by the processor in response to an interrupt or exception is referred to as handling the interrupt or exception. Interrupts occur at random times during the execution of a program, e.g., in response to signals from physical devices (e.g., requests to service peripheral devices). An interrupt may be addressed to any subset of processors within the system. In a computer system running one or more virtual machines, interrupts may be virtualized by the hypervisor identifying one or more virtual processors for servicing an outstanding interrupt and routing (or injecting) the interrupt message to the identified virtual processors (also referred to as virtual central processing units (vCPU)). Injectable interrupts include external interrupts, non-maskable interrupt (NMI), processor exceptions, software generated interrupts, system management interrupts, initialization interrupts, reset interrupts and software traps.

In nested virtualization, input/output operations for child VMs (e.g., L2 VM) go through the parent VM (e.g., L1 VM), resulting in several context switches. For example, when the hypervisor receives an input operation for the L2 VM, an interrupt occurs at the hypervisor, and the hypervisor injects the interrupt into the L1 VM by sending the interrupt signal to a vCPU of the L1 VM. This triggers a virtual machine exit (VMExit) event from the receiving vCPU (e.g., the vCPU of L1 VM) and a virtual machine enter (VMEnter) event to the vCPU of L2 VM to inject the interrupt into the L2 VM. A similar chain of events would occur in the opposite direction for L2 VM output operations. These processes use additional processing resources (e.g., central processing unit (CPU) resources) and hinders performance.

In embodiments of the present techniques, a parent VM (e.g., L1 VM) can request the hypervisor to create a child VM on behalf of the parent VM and allocate a portion of the computing resources (e.g., memory and/or vCPUs) provided to the parent VM to be used for the newly created child VM. In these systems, the parent VM can be referred to as a step-parent VM and the child VM created by the hypervisor can be referred to as the step-child VM. The step-child VM runs on a subset of the resources provided to the step-parent VM, but the step-child VM has direct access to the hypervisor and is not nested within the step-parent VM. In this sense, the step-child VM is at the same virtualization level (e.g., L1) as the parent VM. Accordingly, the cost of input/output operations for the child VM is lower compared to a traditional nested VM because the input/output operations of the child VM do not go through the parent VM.

However, since the child VM is not nested within the parent VM, the parent VM may not have full access to the resources allocated to the child VM and may not have full autonomous control over the parent VM. Thus, management of the child VM by the parent VM is conducted through the hypervisor, which may lead to management challenges and inefficiencies. For example, in a distributed computing system, VMs are often controlled by a scheduling policy that determines when specific VMs are allowed to run. The scheduling may be imposed on a group of child VMs by the parent VM, which commands specific VMs to start and stop at specific times in accordance with the schedule. In traditional nesting, the parent VM can stop the child VM by sending an interrupt directly to the child VM to cause a virtual machine exit (VMExit). However, for stepchild VMs, the parent VM does not have direct control over the child VM and cannot stop a child VM in this way. Accordingly, the parent VM may be blocked from running until the hypervisor signals that the child VM has stopped running. One possible solution to this problem is to create a paravirtual interface that enables the guest OS of the VM to be aware of the virtualization layer and communicate directly with the hypervisor. However, this would require developing several non-standard software tools to be included in the hypervisor and the guest operating system.

The present disclosure describes techniques to address the above-noted and other deficiencies by providing mechanisms that enable a step-parent VM to stop the execution of a step-child VM. Embodiments of the present techniques include a hypervisor that is enhanced to support a new type of control group that causes all threads within the group to run on the same host processing unit (CPU or CPU core). This new control group may be referred to herein as a "uniprocessor" control group. Keeping the threads within a group on the same processing unit ensures that only one thread may be executing at any time. In some embodiments, the uniprocessor control group may also support the assignment of priority levels to threads. The priority levels determine which thread will execute in the event that two or more threads are runnable at the same time.

VMs may use the uniprocessor control group to configure one or more child VMs. For example, if a VM instructs the hypervisor to create a child VM, the hypervisor may put the child VM in the same uniprocessor control group and give higher priority to the requesting VM, which is now the step-parent of the new step-child VM. With this arrangement, the parent VM can stop the child VM from running by sending a signal (e.g., asynchronous signal) to the thread that represents the parent VM. Once the hypervisor determines that there is information in the thread of the parent VM, the hypervisor will preemept the child VM and cause the child VM to stop running. In this way, the parent VM can cause a VM exit from the child VM to the parent VM even though the child VM is not nested within the parent VM. Thus, the efficiencies provided by step-child VMs can be realized while still enabling the parent VM to have control over the child VMs that would normally only be possible if the child VM was nested within the parent VM. Additionally, the child VM can be controlled using native CPU instructions such as interrupts. Thus, the techniques disclosed herein can be implemented in a fully virtual system using without modifying the guest operating system to be aware of the virtualization layer and without the need for a paravirtualization interface between the guest OS and the hypervisor.

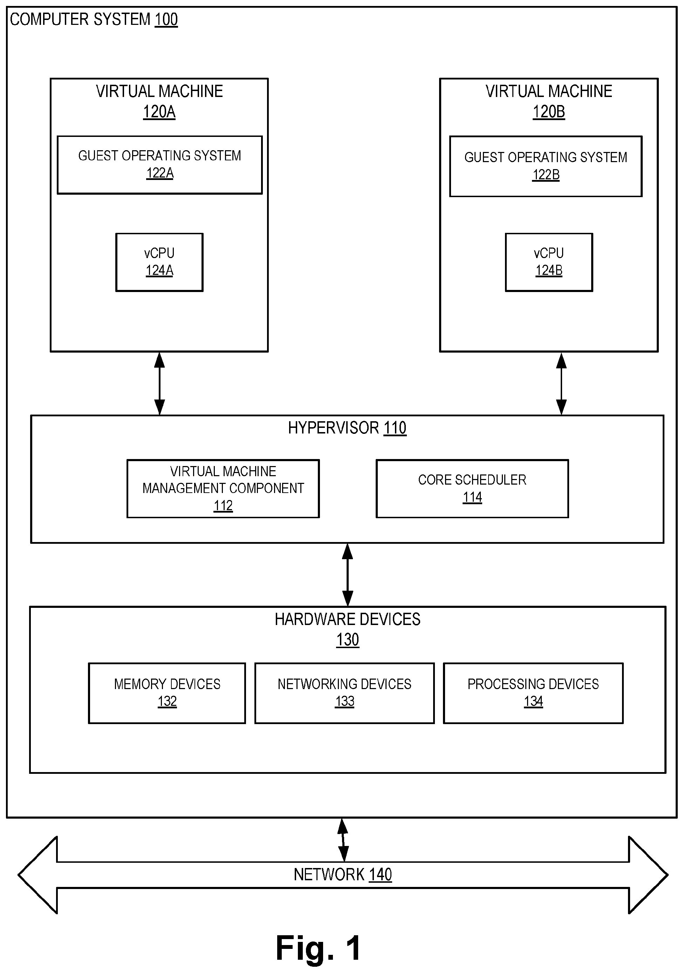

Fig. 1 is a block diagram that illustrates an example computing device 100, in accordance with some embodiments of the present disclosure. It should be noted that other architectures for computer system 100 are possible, and that the implementation of a computer system utilizing embodiments of the disclosure are not necessarily limited to the specific architecture depicted. Computer system 100 can be a single host machine or multiple host machines that may be arranged in a homogenous or non-homogenous group (e.g., cluster system, grid system, or distributed system). Computer system 100 can include a rackmount server, a workstation, a desktop computer, a notebook computer, a tablet computer, a mobile phone, a palm-sized computing device, a personal digital assistant (PDA), etc. In the implementation depicted in Fig. 1, computer system 100 can include hypervisor 110, virtual machines 120A-B, hardware devices 130, and network 140.

The computing device 100 can provide operating system level virtualization by running a computer program that provides computing resources to one or more VMs 120A-B, which can, in some implementations be deployed within respective containers. Operating system level virtualization can be implemented within the hypervisor 110 and can facilitate the isolation of VMs from one another. In one implementation, operating system level virtualization may not require hardware support and may impose little to no overhead because programs within each of the VMs may use the underlying hypervisor 110 to execute system calls. This may enable the computing device 100 to provide virtualization without the need to provide hardware emulation or be run in an intermediate virtual machine as may occur with hardware level virtualization. Operating system level virtualization may provide resource management features that isolate or limit the impact of one VM or another. For example, the hypervisor can manage and limit the access that a VM (e.g., VM 120A) has to the resources of another VM (e.g., VM 120B).

The operating system level virtualization can provide a pool of computing resources that are accessible by VM 120A but are isolated from one or more other VMs. The pool of resources can include file system resources (e.g., particular volumes), network resources (e.g., particular network interfaces, sockets, addresses, or ports), memory resources (e.g., particular memory portions), other computing resources, or a combination thereof. The operating system level virtualization can also limit (e.g., isolate) a VM's access to one or more computing resources by monitoring the VM's activity and restricting the activity based on one or more predetermined limits. The limits may restrict the rate of the activity, the aggregate amount of the activity, or a combination thereof. The limits may include one or more of file system limits, disk limits, input/out (I/O) limits, memory limits, CPU limits, network limits, other limits, or a combination thereof.

Hypervisor 110 can include an operating system virtualizer that may provide VMs 120A-B with access to computing resources through respective virtual central processing units (vCPUs) 124A and 124B. The operating system virtualizer may wrap one or more processes (e.g., of a particular service) in a complete file system that contains the code, runtime, system tools, system libraries, and other data present on the node that can be used by the processes executing within the VM. The hypervisor 110 (e.g., via a VM management component 112) can create VMs 120A-B. In some embodiments, the hypervisor 110 may also configure one or more of the VMs 120A-B with respective virtual network interface controllers (vNICs) to enable them to transmit data (e.g., network data packets).

Each of the VMs 120A-B can refer to a resource-constrained execution environment implemented by computer system 100. Each of VMs 120A-B may appear to a user as a standalone instance of the user space of an operating system (not shown) of the computer system 100. Each of the VMs 120A-B can share the same kernel of a host operating system but may be constrained to use only a defined set of computing resources (e.g., CPU, memory, I/O).

VMs 120A-B can execute guest executable code that uses an underlying emulation of the physical resources. The guest executable code may include a guest operating system 122A-B, guest applications, guest device drivers, etc. Each of the VMs 120A-B can support hardware emulation, full virtualization, para-virtualization, operating system-level virtualization, or a combination thereof. VMs 120A-B can have the same or different types of guest operating systems. VMs 120A-B can execute guest operating systems 122A-B that manage the vCPUs 124A-B and schedule threads to be processed by the vCPUs 124A-B.

Each VM can be allocated guest memory (not shown) which can be any virtual memory, logical memory, physical memory, other portion of memory, or a combination thereof for storing, organizing, or accessing data. Guest memory can represent the portion of memory that is allocated by hypervisors 110 for use by one or more respective VMs 120A-B. Guest memory can be managed by guest operating system 122A-B. The hypervisor 110 can have hypervisor memory (not shown) allocated for hypervisor operations that can be the same or similar to the guest memory but can be managed by hypervisor 110 instead of a guest operating system. The memory allocated to VMs 120A-B can be a portion of hypervisor memory that has been allocated by hypervisor 110 to VMs 120A-B and can correspond to guest memory of VMs 120A-B. In some implementations a portion of the guest memory of VM 120A can be allocated to VM 120B or one or more of its virtual devices (e.g., vNICs and vCPUs 124A-B). Other portions of hypervisor memory may be allocated for use by hypervisor 110, a host operating system, hardware device, other module, or a combination thereof.

Hypervisor 110 can also be known as a virtual machine monitor (VMM) and can provide VMs 120A-B with access to one or more features of the underlying hardware devices 130 including physical memory devices 132, physical networking devices 133, and physical processing devices 134. In the example shown, hypervisor 110 can run directly on the hardware of computer system 100 (e.g., bare metal hypervisor). In other examples, hypervisor 110 can run on or within a host operating system (not shown). Hypervisor 110 can manage system resources, including access to hardware devices 130, and may manage execution of VMs 120A-B on a host machine (e.g., computer system 100). This includes provisioning resources of a physical central processing unit to each VM 120A-B running on the host machine. Software executing in VMs 120A-B may operate with reduced privileges such that hypervisor 110 retains control over resources. In some implementations, hypervisor 110 can retain selective control of the processor resources, physical memory, interrupt management, networking, and input/output ("I/O").

In the example shown, hypervisor 110 can include a VM management component 112 and a core scheduler 114. The VM management component 112 is configured create and manage VMs. The core scheduler 114 is configured to map the vCPUs 124A-B to specific processing units among the processing devices 134 .

The VM management component 112 and core scheduler 114 can refer to software components implemented by one or more software modules, each module associated with a set of executable instructions. Furthermore, the VM management component 112 and core scheduler 114 can represent functional aspects of the hypervisor 110 (i.e., the VM management component 112 and core scheduler 114 can be an integral parts of the executable code of the hypervisor 110).

In the example embodiment shown in Fig. 1, VM 120B is a step-child VM created in response to a request from the VM 120A. For purposes of the following description, the VM 120A will be referred to as the parent VM 120A and the VM 120B may be referred to as the child VM 120b. It will be appreciated that the child VM 120B is a step-child VM and has direct access to the hypervisor 110 as opposed to a traditional nested VM.

The VM management component 112 can create and configure each VM 120A-B with one or more virtual network interface controllers (vNICs) and one or more vCPUs 124A-B. The child VM 120B may be executed on a portion of the resources allocated to the parent VM 120A and, therefore, imposes little to no overhead because programs and virtual devices within the child VM 120B can use computing resources (e.g., memory, processing) that have already been allocated by the underlying hypervisor 110 to execute system calls.

Hardware devices 130 can provide hardware resources and functionality for performing computing tasks. Hardware devices 130 can include one or more physical memory devices 132, one or more physical networking devices 133, one or more physical processing devices 134, other computing devices, or a combination thereof. One or more of hardware devices 130 can be split up into multiple separate devices or consolidated into one or more hardware devices. Some of the hardware device shown can be absent from hardware devices 130 and can instead be partially or completely emulated by executable code.

Physical memory devices 132 can include any data storage device that is capable of storing digital data and can include volatile or non-volatile data storage. Volatile data storage (e.g., non-persistent storage) can store data for any duration of time but can lose the data after a power cycle or loss of power. Non-volatile data storage (e.g., persistent storage) can store data for any duration of time and can retain the data beyond a power cycle or loss of power. In one implementation, physical memory devices 132 can be physical memory and can include volatile memory devices (e.g., random access memory (RAM)), non-volatile memory devices (e.g., flash memory, NVRAM), and/or other types of memory devices. In another example, physical memory devices 132 can include one or more mass storage devices, such as hard drives, solid state drives (SSD)), other data storage devices, or a combination thereof. In a further example, physical memory devices 132 can include a combination of one or more memory devices, one or more mass storage devices, other data storage devices, or a combination thereof, which can or may not be arranged in a cache hierarchy with multiple levels.

Physical processing devices 134 can include one or more processors that are capable of executing the computing tasks. Physical processing devices 134 can be a single core processor that is capable of executing one instruction at a time (e.g., single pipeline of instructions) or can be a multi-core processor that simultaneously executes multiple instructions. The instructions can encode arithmetic, logical, or I/O operations. In one example, physical processing devices 134 can be implemented as a single integrated circuit, two or more integrated circuits, or can be a component of a multi-chip module (e.g., in which individual microprocessor dies are included in a single integrated circuit package and hence share a single socket). A physical processing device can also be referred to as a central processing unit ("CPU").

Physical networking devices 133 (e.g., a network adapters or any other components that can connect a computer system to a computer network) can link the computer system 100 to network 140. Network 140 can be a public network (e.g., the internet), a private network (e.g., a local area network (LAN), a wide area network (WAN)), or a combination thereof. In one example, network 140 can include a wired or a wireless infrastructure, which can be provided by one or more wireless communications systems, such as a wireless fidelity (WiFi) hotspot connected with the network 140 and/or a wireless carrier system that can be implemented using various data processing equipment, communication towers, etc.

The parent VM 120A can be created and managed by the hypervisor 110 (e.g., the virtual machine management component). The hypervisor 110 can also create the child VM 120B in response to a request received from parent VM 120A to create the child VM 120B. In the example system shown in Fig. 1, the parent VM 120A includes vCPU 124A and the child VM 120B includes vCPU 124B. The vCPUs 124A-B enable the programs running on the respective VM 120A-B to access computation resources provided by the processing devices 134. The guest operating systems 122A-B schedule threads onto the respective vCPUs 122A-B.

In some embodiments, the request to create the step-child VM may be an implicit request, wherein the parent VM 120A sends an operation to the hypervisor 110 that references the child VM 120B, and the hypervisor 110 interprets this operation as a request to create the child VM 120B if the child VM does not already exist. For example, the parent VM 120A may create the child VM 120B by creating, within its guest operating system 122A, a new thread of execution that represents the child VM 120B (referred to herein as a representative thread). The parent VM 120A allocates resources to the new thread within its own virtualized environment. This may include assigning memory for the thread's stack, registers, and other necessary data structures. The new thread may then execute an operation that causes an exit to the hypervisor 110. For example, the operation may be a VMEnter event as if entering a nested child VM. If the child VM 120B has already been created, the hypervisor 110 may process the VMEnter event by causing a context switch to the child VM identified by the VMEnter event. If the child VM referenced by the VMEnter event does not exist, the hypervisor 110 can interpret the VMEnter event as a request to create a step-child VM. Any operation that causes an exit to the hypervisor 110 may be used as an implicit request to create a step-child VM.

When the hypervisor 110 detects this operation, the hypervisor 110 blocks the parent vCPU thread and creates the child VM 120B, which includes allocating resources for the vCPU 124B, such as memory for storing the virtual CPU state, registers, and control structures. The resources allocated to the vCPU 124B of the child VM 120B may be a subset of the resources allocated to the parent VM 120A. The vCPU resource allocation may be determined based on a default allocation specified for step-child VMs.

The hypervisor 110 may also be configured to place the vCPU 124B within a same control group as the vCPU 124A of the parent VM 120A (along with any other child VMs that may have been created by the parent VM 120A). The control group may be referred to herein as a uniprocessor control group. As used herein, the term uniprocessor control group refers to a group of vCPUs that are restricted to running on a same processing unit to enable the parent VM to control the child VMs created on behalf of the parent VM. As used herein, the term "processing unit" refers to a physical processor (e.g., CPU or CPU core) that is able to process a single thread at a time. For example, the processing unit may be a physical CPU with a single core or, if the processing devices 134 are CPUs with multiple processing cores, the processing unit may refer to an individual core of one of the CPUs. Placing the child VM's vCPU in a uniprocessor control group with the parent VM's vCPU 124A prevents the child VM's vCPU 124B from being migrated to a different processing unit separately from the parent vCPU 124A. The hypervisor 110 may also be configured to assign different priority levels to each of the vCPUs of a uniprocessor control group. The parent vCPU may be assigned a higher priority than the child vCPU of the child VM 120B (and any other vCPU within the same uniprocessor control group). Once the vCPU 124B is configured, the vCPU 124B can start executing the instructions of the child VM 120B.

With the configuration described above, if a thread of the parent VM 120A becomes runnable, the parent thread will interrupt other threads running in the same uniprocessor control group. Accordingly, the parent VM 120A can stop the child from running by sending a signal from the guest operating system 122A to the representative thread of the parent VM 120A, which will cause the parent thread to become runnable. When the parent's vCPU thread becomes runnable, the hypervisor 110 will detect this and cause a context switch from the child VM 120B to the parent VM 120A since the parent VM 120A has the higher priority level, thereby waking the parent VM and suspending the child VM. Additionally, because the vCPU 124B of the child VM 120B is in the same uniprocessor group as the vCPU 124A of the parent VM 120A, the vCPU of child VM 120B will not be migrated to another physical processing unit. Once the parent VM 120A establishes control, the parent VM 120A can continue running the parent thread, initiate an additional child VM, or cause a context switch to another child VM, etc. The child VM 120B will remain suspended until the parent VM 120A issues a VMenter event to the child VM 120B.

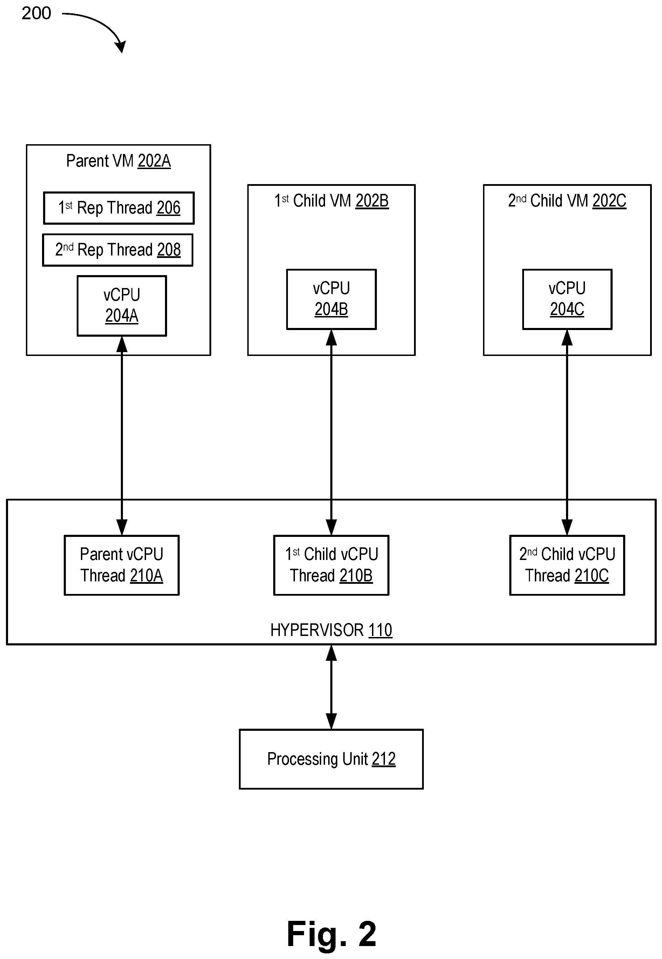

In some cases, the core scheduler 114 may also migrate the uniprocessor control group to a new processing unit. For example, depending on the number vCPUs created and the number of processing units available, the uniprocessor control group may share the processing unit with another vCPU that is not within the same uniprocessor control group, which may lead to resource contention and performance degradation. To avoid this, the core scheduler 114 may occasionally migrate some vCPUs to different processing units to balance the processing load. In the event of a migration event, the core scheduler 114 ensures that all of the vCPUs of a uniprocessor control group are migrated together to the same processing unit. These and other features of the present disclosure are described in more detail with reference to Fig. 2.

Fig. 2 is a block diagram illustrating a system for managing child virtual machines in accordance with some embodiments of the present disclosure. The system may be implemented in the computer system 100 of Fig. 1. In the example shown in Fig. 2, the parent VM 202A has created two step-child VMs, a first child VM 202B and a second child VM 202C. The parent VM 202A can create the child VMs 202B and 202C using the process described in relation to Fig. 1. Accordingly, each child VM is associated with a representative thread in the parent VM 202A. Specifically, the first representative thread 206 is associated with the first child VM 202B and the second representative thread 208 is associated with the second child VM 202C. It will be appreciated that although two step-child VMs are shown, the parent VM 202A may be able to create any suitable number of additional step-child VMs.

Each VM 202A-C includes a corresponding vCPU 204A-C. In the hypervisor 110, the parent vCPU 204A is associated with the parent cVPU thread 210A, the first child vCPU 204B is associated with the first child cVPU thread 210B, and the second child vCPU 204C is associated with the second child cVPU thread 210C. The threads 210A-C are part of the same uniprocessor control group and are, therefore, mapped by the hypervisor 110 to a same processing unit 212 (e.g., same CPU or CPU core). Additionally, the hypervisor 110 will assign the parent VM 202A a higher priority compared to the child VMs 202B-C. It will be appreciated that the parent VM 202A may have additional vCPUs (not shown) that are not assigned to the same uniprocessor control group and whose threads may be mapped to different processing units.

With this configuration, the parent VM 202A is able to stop any child VM from running by sending a signal to one of the representative threads 206 or 208. Sending a signal to the first representative thread 206 or the second representative thread 208 while a child VM is running will make the parent vCPU thread 210A runnable, which will cause the hypervisor 110 to preempt the currently running child VM 202B or 202C. This results in a context switch to the parent VM 202A that gives control back to the parent VM 202A and allows the parent vCPU thread 210A to run.

Enabling the parent VM 202A to stop the child VMs 202B-C can enable the implementation of various techniques that were not previously possible with step-child VMs. For example, the parent VM 202A can control a VM scheduling process, whereby the parent VM 202A controls how much processing time each of the child VMs 202B-C is allotted. Such a process was not previously possible in step-child VMs since the parent VM did not have full access to resources of the step-child VMs and was not able to stop a step-child VM from running. In the present techniques, the parent VM 202A can stop the first child VM 202B, then instruct the hypervisor 110 to pass control to the second child VM 202C using VMenter event, for example. Once the second child VM 202C has run for a specified amount of time, the parent VM 202A can stop the second child VM 202C, then instruct the hypervisor 110 to pass control back to the first child VM 202B. In this way, the parent VM 202A actively controls the scheduling of the child VMs 202B-C even though each child VM has direct access to the hypervisor 110 and is not nested within the parent VM 202A.

In some embodiments, a child VM may create another child VM using the same process described above in relation to Fig. 1. For example, in some embodiments, the second child VM 202C may be created in response to a request received from the first child VM 202B, in which case the first child VM 202B would be the parent of the second child VM 202C and both child VMs 202B-C will be part of the same uniprocessor group as the parent VM 202A. Additionally, the first child VM 202B may be assigned a higher priority than the second child VM 202C and can preempt the second child VM 202C by sending a signal to a representative thread that represents the second child VM 202C and is created by the guest operating system of the first child VM 202B. Accordingly, the first child VM 202B is able to stop the second child VM 202C from running and the parent VM is able to stop either of the child VMs 202B-C from running.

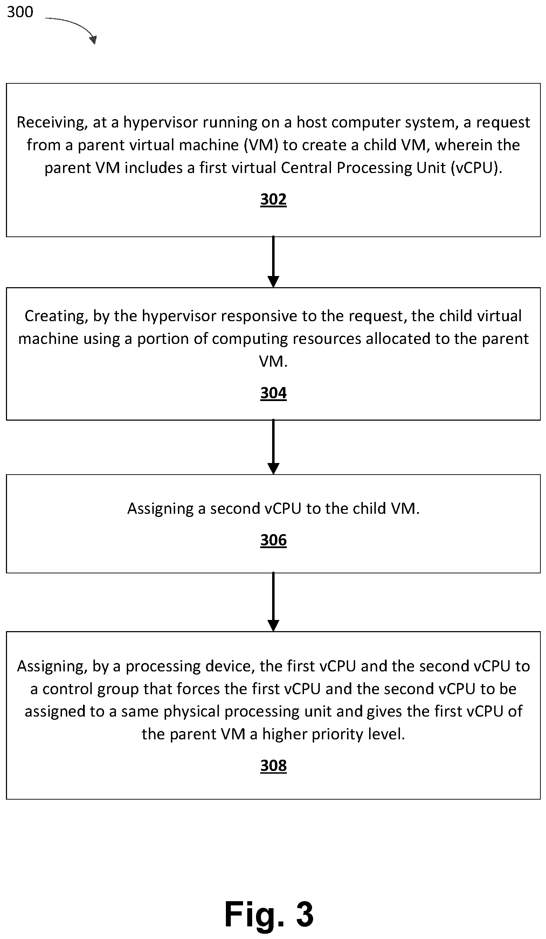

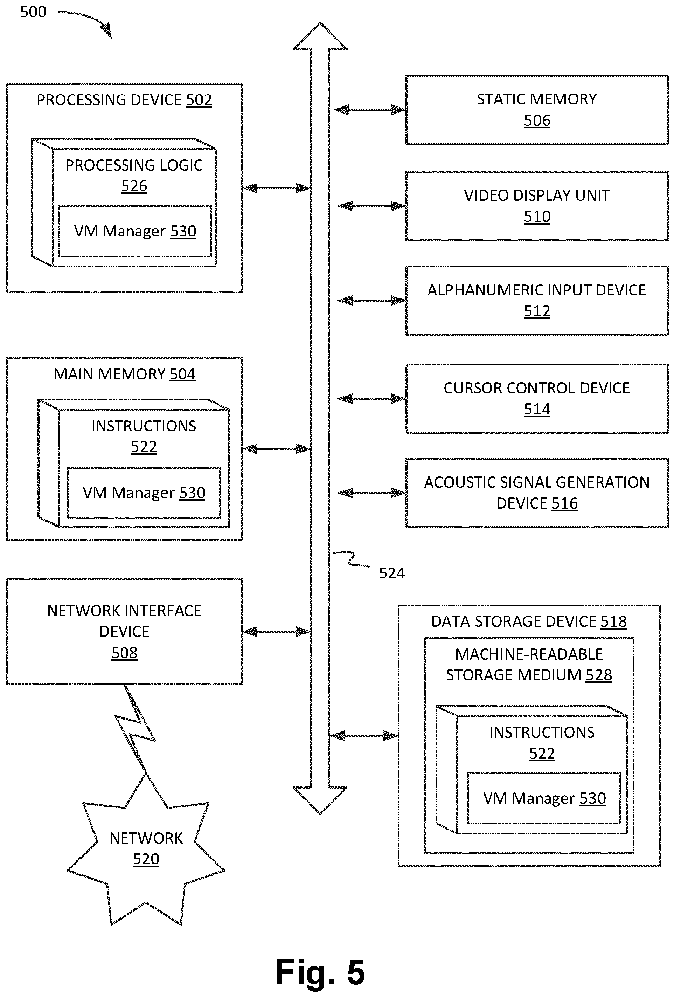

Fig. 3 is a flow diagram summarizing a method 300 of creating and configuring a child VM, in accordance with some embodiments of the present disclosure. The method 300 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of the method 300 may be performed by virtualization hardware, firmware, or software, such the hypervisor 110 of Figs. 1 and 2, the virtual machine manager 530 (Fig. 5), and others.

With reference to Fig. 3, method 300 illustrates example functions used by various embodiments. Although specific function blocks are shown in method 300, such blocks are examples. That is, embodiments are well suited to performing various other blocks or variations of the blocks recited in method 300. It is appreciated that the blocks in method 300 may be performed in an order different than presented, and that some the blocks in method 300 may be eliminated.

At block 302, a request to create a child VM is received from a parent virtual machine (VM), wherein the parent VM includes a first virtual Central Processing Unit (vCPU). The request to create a child VM may be an implicit request, which references the child VM to be created.

At block 304, the child VM is created by the hypervisor responsive to the request received at block 302 using a portion of computing resources allocated to the parent VM. The resources may be determined according to a default specification configured for step-child VMs. The resources may include memory registers, vNICs, storage addresses, and others. The parent VM and the child VM are implemented at a same virtualization level (e.g., L1) and have direct access to the hypervisor (e.g., L0).

At block 306, a second vCPU is assigned to the child VM.

At block 308, the first vCPU and the second vCPU are assigned, by a processing device, to a control group that forces the first vCPU and the second vCPU to be assigned to a same physical processing unit and gives the first vCPU of the parent VM a higher priority level. The control group may be referred to herein as a uniprocessor control group. The uniprocessor control group ensures that the parent VM is able to preempt the child VMs under its control if the parent thread of the first vCPU becomes runnable.

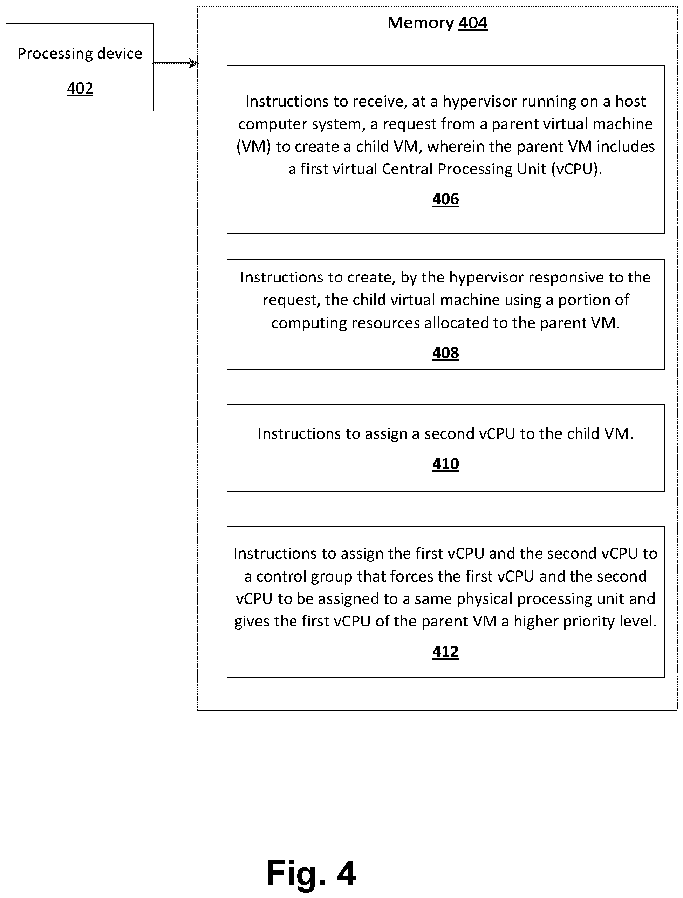

Fig. 4 is a block diagram of a system for creating and configuring a child VM, in accordance with some embodiments of the present disclosure. The system 400 includes a processing device 402 operatively coupled to a memory 404. The memory 404 includes instructions that are executable by the processing device 402 to cause the processing device 402 to create a step-child VM and configure the parent VM and step-child VM to enable to the parent VM to stop the child VM from running, in accordance with some embodiments of the present disclosure.

The memory 404 includes instructions 406 to receive, at a hypervisor running on a host computer system, a request from a parent virtual machine (VM) to create a child VM, wherein the parent VM includes a first virtual Central Processing Unit (vCPU). The memory 404 also includes instructions 408 to create, by the hypervisor responsive to the request, the child virtual machine using a portion of computing resources allocated to the parent VM. The memory 404 also includes instructions 410 to assign a second vCPU to the child VM. The memory 404 also includes instructions 412 to assign the first vCPU and the second vCPU to a control group that forces the first vCPU and the second vCPU to be assigned to a same physical processing unit and gives the first vCPU of the parent VM a higher priority level.

It will be appreciated that various alterations may be made to the process illustrated in Fig. 4 and that some components and processes may be omitted or added without departing from the scope of the disclosure.

Fig. 5 is a block diagram of an example computing device 500 that may perform one or more of the operations described herein, in accordance with some embodiments of the present disclosure. Computing device 500 may be connected to other computing devices in a LAN, an intranet, an extranet, and/or the Internet. The computing device may operate in the capacity of a server machine in client-server network environment or in the capacity of a client in a peer-to-peer network environment. The computing device may be provided by a personal computer (PC), a server, or any machine capable of executing a set of instructions (sequential or otherwise) that specify actions to be taken by that machine. Further, while only a single computing device is illustrated, the term "computing device" shall also be taken to include any collection of computing devices that individually or jointly execute a set (or multiple sets) of instructions to perform the methods discussed herein.

The example computing device 500 may include a processing device (e.g., a general purpose processor, a PLD, etc.) 502, a main memory 504 (e.g., synchronous dynamic random access memory (DRAM), read-only memory (ROM)), a static memory 506 (e.g., flash memory) and a data storage device 518, which may communicate with each other via a bus 524.

Processing device 502 may be provided by one or more general-purpose processing devices such as a microprocessor, central processing unit, or the like. In an illustrative example, processing device 502 may comprise a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 502 may also comprise one or more special-purpose processing devices such as an application specific integrated circuit (ASIC), a field programmable gate array (FPGA), a digital signal processor (DSP), network processor, or the like. The processing device 502 may be configured to execute the operations described herein, in accordance with one or more aspects of the present disclosure, for performing the operations and steps discussed herein.

Computing device 500 may further include a network interface device 508 which may communicate with a network 520. The computing device 500 also may include a video display unit 510 (e.g., a liquid crystal display (LCD) or a cathode ray tube (CRT)), an alphanumeric input device 512 (e.g., a keyboard), a cursor control device 514 (e.g., a mouse) and an acoustic signal generation device 516 (e.g., a speaker). In one embodiment, video display unit 510, alphanumeric input device 512, and cursor control device 514 may be combined into a single component or device (e.g., an LCD touch screen).

Data storage device 518 may include a computer-readable storage medium 528 on which may be stored one or more sets of instructions 522 that may include VM manager 530 comprising instructions for carrying out the operations described herein, in accordance with one or more aspects of the present disclosure. The VM manager 530 may also reside, completely or at least partially, within main memory 504 and/or within processing device 502 (e.g., within processing logic 526) during execution thereof by computing device 500, main memory 504 and processing device 502 also constituting computer-readable media. The VM manager 530 may further be transmitted or received over a network 520 via network interface device 508.

While computer-readable storage medium 528 is shown in an illustrative example to be a single medium, the term "computer-readable storage medium" should be taken to include a single medium or multiple media (e.g., a centralized or distributed database and/or associated caches and servers) that store the one or more sets of instructions. The term "computer-readable storage medium" shall also be taken to include any medium that is capable of storing, encoding or carrying a set of instructions for execution by the machine and that cause the machine to perform the methods described herein. The term "computer-readable storage medium" shall accordingly be taken to include, but not be limited to, solid-state memories, optical media and magnetic media.

Unless specifically stated otherwise, terms such as "sending," "receiving," "creating," "determining," "assigning," "generating," "transferring," "providing," "performing," "blocking," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the techniques to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the disclosure is not to be limited to the details given herein, but may be modified within the scope of the appended claims.

## Claims

1. A method comprising:
receiving, at a hypervisor running on a host computer system, a request from a parent virtual machine (VM) to create a child VM, wherein the parent VM includes a first virtual Central Processing Unit (vCPU);
responsive to the request, creating, by a processing device executing the hypervisor, the child VM using a portion of computing resources allocated to the parent VM;
assigning a second vCPU to the child VM; and
assigning the first vCPU and the second vCPU to a control group that forces the first vCPU and the second vCPU to be assigned to a same physical processing unit and gives the first vCPU of the parent VM a higher priority level.

2. The method of claim 1, wherein the parent VM and the child VM are implemented at a same L1 virtualization level and have direct access to the hypervisor.

3. The method of claim 1, wherein the parent VM will preempt the child VM if a parent thread of the first vCPU becomes runnable.

4. The method of claim 1, further comprising:
after creating the child VM, blocking a thread of the first vCPU of the parent VM and performing a context switch from the parent VM to the child VM.

5. The method of claim 1, further comprising:
sending a signal to a representative thread of the parent VM, wherein the representative thread represents the child VM within a guest operating system of the parent VM; and
responsive to the signal, performing a context switch from the child VM to the parent VM.

6. The method of claim 1, wherein the hypervisor is blocked from migrating the second vCPU of the child VM to another processing unit separate from the same physical processing unit of the first vCPU of the parent VM.

7. The method of claim 1, wherein the child VM is a first child VM, the method further comprising:
receiving a second request from the parent VM to create a second child VM;
creating the second child VM and assigning a third vCPU to the second child VM;
assigning the third vCPU to the control group of the first vCPU and the second vCPU; and
after creating the second child VM, blocking a thread of the first vCPU of the parent VM and performing a context switch from the parent VM to the child VM.

8. The method of claim 7, further comprising:
sending a signal to a representative thread of the parent VM, wherein the representative thread represents the first child VM or the second child VM;
responsive to the signal, performing a context switch from the second child VM to the parent VM; and
responsive to a VMenter event from the parent VM targeting the first child VM, performing a context switch from the second child VM to the first child VM.

9. A system comprising:
a processing device; and
a memory to store instructions that, when executed by the processing device, cause the processing device to perform the method of any of claims 1 to 8.

10. A non-transitory computer-readable medium, comprising instructions stored thereon which, when executed by a processing device, cause the processing device to perform the method of any of claims 1 to 8.
